# EUROPEAN PATENT APPLICATION

(11) **EP 2 592 299 A1**
(43) Date of publication of application: **15.05.2013**
(21) Application number: 10854400.8
(22) Date of filing: 05.07.2010
(51) Int. Cl.: F16D 69/00

(54) **BRAKE LINING AND METHOD FOR MANUFACTURING SAME**

(71) Applicant: Mitsubishi Electric Corporation, Tokyo 100-8310 (JP)
(72) Inventor: OTA, Hitoshi, Tokyo 100-8310 (JP); HASHIMOTO, Akira, Tokyo 100-8310 (JP)
(74) Representative: HOFFMANN EITLE
(86) International application number: PCT/JP2010/061385
(87) International publication number: WO 2012/004844

(57) **Abstract**

A brake lining is disposed on a braking apparatus, and is pushed against a braked rotating body such as a brake disk or a brake drum to brake rotation of the braked rotating body. Hardness of the brake lining increases gradually toward a central portion from an end portion in a direction of sliding motion relative to the braked rotating body. Density of material is high and hardness is increased in a vicinity of the central portion of the brake lining. The density of the material is reduced gradually from the vicinity of the central portion of the brake lining towards the end portion, and hardness also decreases gradually.

## Description

### TECHNICAL FIELD

The present invention relates to a brake lining that is used in elevator hoisting machine brakes, electric motor brakes, and automobile brakes, for example, and to a manufacturing method therefor.

### BACKGROUND ART

In conventional brake linings, a large number of voids are formed by introducing diatomaceous earth, which is a porous mineral material, in order to suppress noise such as squeaking and impact noise when braking (see Patent Literature 1, for example).

In conventional carbon fiber-reinforced carbon composite materials, a large number of voids are formed by laminating, heating, and pressing sheet-shaped fibers. Spacers are used during formation so as to obtain a predetermined porosity. In addition, a high-strength composite is obtained by baking the laminated body after formation (see Patent Literature 2, for example).

In addition, in conventional disk brake friction pads, localized contact is prevented and squeaking is suppressed by gluing soft members to two end portions of a lining to facilitate deformation of the two end portions of the lining (see Patent Literature 3, for example).

### CITATION LIST

### PATENT LITERATURE

[Patent Literature 1]
   Japanese Patent Laid-Open No. 2003-194121 (Gazette)
[Patent Literature 2] Japanese Patent Laid-Open No. 2001-181064 (Gazette)
[Patent Literature 3] Japanese Patent Laid-Open No. 2003-21181 (Gazette)

### SUMMARY OF THE INVENTION

### PROBLEM TO BE SOLVED BY THE INVENTION

In conventional brake linings in which voids are disposed as described above, noise is reduced when porosity is increased, but strength is reduced, and there is a risk of rupturing. Because of this, selection of materials for adjusting porosity is difficult, and one problem has been that it is necessary to introduce a plurality of materials that are not necessary for ensuring satisfactory frictional characteristics, or also to mix together a plurality of kinds of fibers that constitute the substrate, increasing lining manufacturing costs.

In an elevator hoisting machine, for example, the hoisting machine brake performs the braking operation after rotation of a disk or rotor has stopped, but even if the subject of the braking is at rest, impact noise arises on contact with the lining.

In addition, when the brake lining contacts the disk, end portions of the lining contact first, and squeaking may arise due to stick-slip occurring. In answer to that, in the conventional friction pad that is disclosed in Patent Literature 3, soft members are disposed on two end portions of the lining, but because hardness changes discontinuously at the boundaries between the lining main body and the members that are glued to the two end portions thereof, it is also conceivable that stick-slip may be generated at those positions.

The present invention aims to solve the above problems and an object of the present invention is to provide a brake lining in which wear resistance is high, and in which noise such as squeaking and impact noise can be suppressed, and to provide a manufacturing method therefor.

### MEANS FOR SOLVING THE PROBLEM

In order to achieve the above object, according to one aspect of the present invention, there is provided a brake lining that is pushed against a braked rotating body to brake rotation of the braked rotating body, wherein hardness increases gradually towards a central portion from an end portion in a direction of sliding motion relative to the braked rotating body.
According to another aspect of the present invention, there is provided a brake lining that is pushed against a braked rotating body to brake rotation of the braked rotating body, wherein the brake lining includes: a lining main body; and a plurality of high-hardness portions that are disposed in a vicinity of a central portion of the lining main body, and that have a higher hardness than the lining main body.
According to yet another aspect of the present invention, there is provided a method for manufacturing a brake lining including steps of: mixing together a substrate and a plurality of compounds to make a mixture; injecting the mixture into a die, and molding the mixture by heating and pressing using a punch; and polishing a molded body thus formed, and using a combination of the punch and the die in which spacing between a bottom surface inside the die and a pressing surface of the punch is gradually reduced from a portion that corresponds to an end portion of the brake lining toward a portion that corresponds to a central portion thereof.
According to yet another aspect of the present invention, there is provided a method for manufacturing a brake lining including steps of: mixing together a substrate and a plurality of compounds to make a mixture; injecting the mixture into a die, and molding the mixture by heating and pressing using a punch; and polishing a molded body thus formed, and using a combination of the punch and the die so as to include a region in which spacing between a bottom surface inside the die and a pressing surface of the punch changes gradually and a region in which the spacing changes discontinuously.
According to yet another aspect of the present invention, there is provided a method for manufacturing a brake lining that is configured by combining: a high-friction portion to which a high-friction material is added; and a high-hardness portion that has a higher hardness than the high-friction portion, including steps of: injecting a material of the high-hardness portion into a die, and molding the material of the high-hardness portion by heating and pressing using a first punch in which a recess portion is formed on a pressing surface; injecting a material of the high-friction portion into the die from above a molded body of the high-hardness portion, and molding the material of the high-friction portion by heating and pressing using a second punch; and polishing a molded body in which the high-hardness portion and the high-friction portion are combined to expose the high-hardness portion at a surface thereof.

### EFFECTS OF THE INVENTION

Since the brake lining 10 according to the present invention is configured such that the hardness is lower at an end portion, the end portion is deformed in the initial stages when it contacts the braked rotating body, enabling mechanical shock to be absorbed. Because of this, vibration of a supporting member of the brake lining and the braked rotating body is reduced, enabling impact noise and squeaking to be suppressed. Furthermore, since it is not necessary to dispose voids in the brake lining, wear resistance can be increased.
Because the high-hardness portion in which hardness is increased is disposed in the vicinity of the central portion, overall wear resistance can be improved and the mechanical shock of contact with the braked rotating body is also absorbed, reducing vibration of the supporting member of the brake lining and the braked rotating body and enabling impact noise and squeaking to be suppressed.
In addition, in the method for manufacturing the brake lining according to the present invention, because the spacing between the bottom surface inside the die and the pressing surface of the punch is gradually reduced from the portion that corresponds to the end portion of the brake lining toward the portion that corresponds to the central portion, the hardness of the brake lining can be changed continuously locally without having to modify the manufacturing steps significantly, enabling a brake lining to be achieved in which wear resistance is high and noise such as squeaking and the impact noise is reduced.
Furthermore, because a combination of the punch and the die is used so as to include a region in which spacing between a bottom surface inside the die and a pressing surface of the punch changes gradually and a region in which the spacing changes discontinuously, the hardness of the brake lining can be changed continuously locally without having to modify the manufacturing steps significantly, enabling a brake lining to be achieved in which wear resistance is high and noise such as squeaking and the impact noise is reduced.
The brake lining in which the high-friction portion and the high-hardness portion are combined can also be manufactured easily, enabling a brake lining to be achieved in which wear resistance is high and noise such as squeaking and the impact noise is reduced.

### BRIEF DESCRIPTION OF THE DRAWINGS

Figure 1 is a cross section that shows part of an elevator hoisting machine according to Embodiment 1 of the present invention;
Figure 2 is a side elevation that shows a brake lining and a brake disk from Figure 1;
Figure 3 is a plan that shows the brake linings and the brake disk from Figure 2;
Figure 4 is a cross section that schematically shows a state during manufacturing of the brake lining from Figure 2;
Figure 5 is an explanatory diagram that shows a state in which a brake lining from Figure 1 contacts the brake disk so as to be inclined relative thereto;
Figure 6 is an explanatory diagram that shows a state in which a brake lining from Figure 1 vibrates while contacting the brake disk;
Figure 7 is an enlargement that shows a state in which an end portion of a brake lining from Figure 1 is deformed by contacting the brake disk;
Figure 8 is a cross section that shows part of an elevator hoisting machine according to Embodiment 2 of the present invention;
Figure 9 is a cross section that schematically shows a state during manufacturing of a brake lining according to Embodiment 3 of the present invention;
Figure 10 is a cross section that schematically shows a state during manufacturing of a brake lining according to Embodiment 4 of the present invention;
Figure 11 is a side elevation that shows a brake lining and a brake disk according to Embodiment 5 of the present invention;
Figure 12 is an explanatory diagram that shows a state in which the brake lining from Figure 11 contacts the brake disk so as to be inclined relative thereto;
Figure 13 is a cross section that schematically shows a state during manufacturing of the brake lining from Figure 11;
Figure 14 is a front elevation that shows a brake lining according to Embodiment 6 of the present invention;
Figure 15 is an explanatory diagram that shows a state in which the brake lining from Figure 14 contacts the brake disk so as to be inclined relative to a longitudinal direction thereof;
Figure 16 is an explanatory diagram that shows a state in which the brake lining from Figure 14 contacts the brake disk so as to be inclined relative to a width direction thereof;
Figure 17 is a side elevation that shows a brake lining and a brake disk according to Embodiment 7 of the present invention;
Figure 18 is a cross section that is taken along line XVIII - XVIII in Figure 17;
Figure 19 is a cross section that schematically shows a state during manufacturing of the brake lining from Figure 17;
Figure 20 is a side elevation that shows a brake lining and a brake disk according to Embodiment 8 of the present invention;
Figure 21 is a cross section that schematically shows a state during manufacturing of the brake lining from Figure 20;
Figure 22 is a side elevation that shows a brake lining and a brake disk according to Embodiment 9 of the present invention;
Figure 23 is a side elevation that shows a brake lining and a brake disk according to Embodiment 10 of the present invention;
Figure 24 is a side elevation that shows a brake lining and a brake disk according to Embodiment 11 of the present invention;
Figure 25 is a side elevation that shows a brake lining and a brake disk according to Embodiment 12 of the present invention; and
Figures 26A through 26D are cross sections that schematically and sequentially show steps of a manufacturing method for the brake lining from Figure 25.

### DESCRIPTION OF EMBODIMENTS

Preferred embodiments of the present invention will now be explained with reference to the drawings.

### Embodiment 1

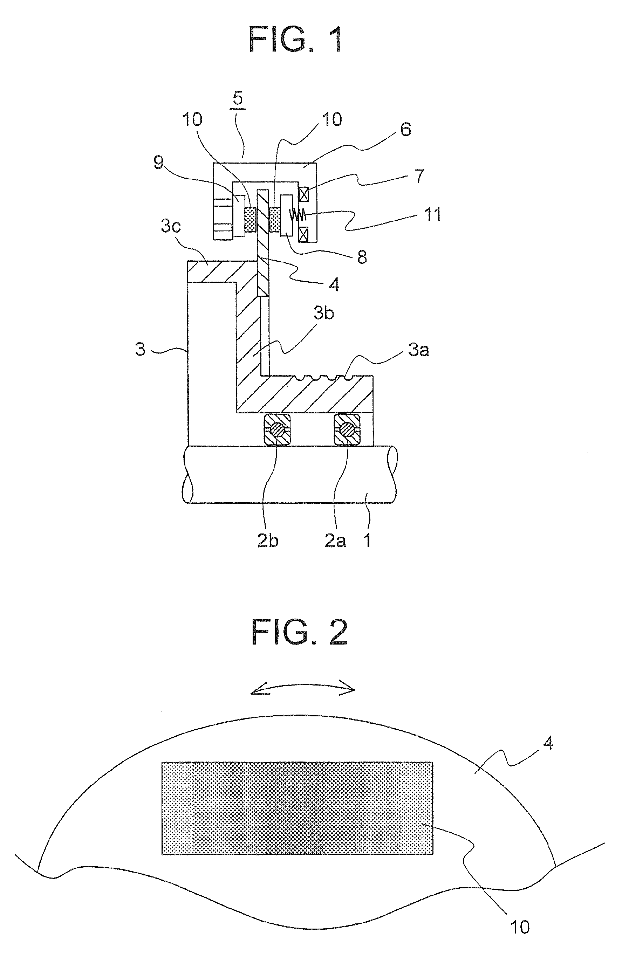

Figure 1 is a cross section that shows part of an elevator hoisting machine according to Embodiment 1 of the present invention. In the figure, a shaft 1 is fixed horizontally to a housing of a hoisting machine. A rotating body 3 (only half depicted in figure) is rotatably supported on an outer circumference of the shaft 1 by means of a pair of bearings 2a and 2b.

Formed integrally on the rotating body 3 are: a cylindrical sheave 3a; a disciform flange portion 3b that protrudes radially outward from a first axial end portion of the sheave 3a; and a cylindrical rotor mount portion 3c that protrudes axially from a radially outer edge portion of the flange portion 3b. A plurality of rope grooves are disposed on the sheave 3a. A plurality of suspending means (ropes or belts) that suspend a car and a counterweight are wound around the sheave 3a.

The rotating body 3 is rotated around the shaft 1 by a driving force from a hoisting machine motor. The hoisting machine motor has: a motor stator that is fixed to the housing; and a motor rotor that is mounted to a rotor mount portion 3c so as to face the motor stator. The car and the counterweight are raised and lowered inside a hoistway by rotation of the sheave 3a.

Disposed on the hoisting machine are: a brake disk 4 (a braked rotating body); and a hoisting machine brake 5 that brakes rotation of the rotating body 3 by means of the brake disk 4. The brake disk 4 is fixed to the flange portion 3b, and is rotated together with the rotating body 3.

The hoisting machine brake 5 has: a yoke 6; an electromagnetic coil 7 that is disposed on the yoke 6; a first brake shoe 8 that faces a first surface (a front surface) of the brake disk 4; a second brake shoe 9 that faces a second surface (a rear surface) of the brake disk 4; a pair of brake linings 10 that are fixed to surfaces of the first and second brake shoes 8 and 9 that face the brake disk 4; and a brake spring 11 that is disposed between the first brake shoe 8 and the yoke 6.

When the rotation of the sheave 3a is stopped, and the car is stopped at a landing floor, passage of electric current to the electromagnetic coil 7 is interrupted, the first brake shoe 8 is pressed toward the brake disk 4 by the brake spring 11, and the brake disk 4 is held between the brake linings 10. The rotation of the brake disk 4 and the rotating body 3 is braked thereby.

When movement of the car is started, the electromagnetic coil 7 is excited to generate electromagnetic attractive force, and the first brake shoe 8 is pulled away from the brake disk 4 in opposition to the spring force from the brake spring 11. The brake linings 10 are thereby separated from the two surfaces of the brake disk 4, releasing the braking force.

If the car is made to perform an emergency stop by operation of a safety apparatus while the car is in motion, then passage of electric current to the electromagnetic coil 7 is interrupted, and the brake linings 10 are pushed against the rotating brake disk 4 to brake the brake disk 4 by friction. In addition, if the passage of electric current to the electromagnetic coil 7 is interrupted due to a power outage while the car is in motion, the brake disk 4 is also similarly braked by friction to stop the car.

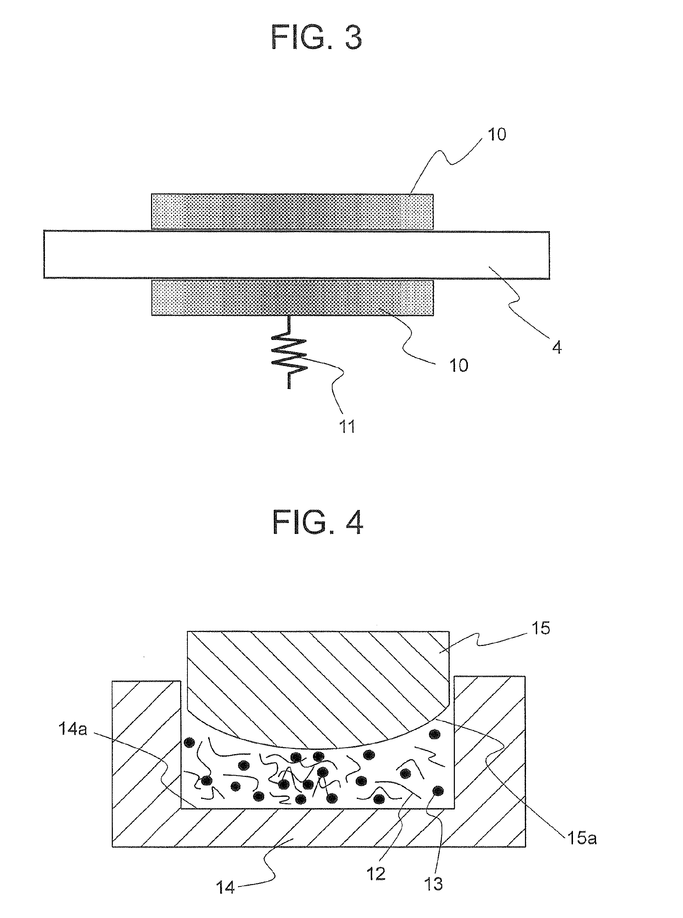

Figure 2 is a side elevation that shows a brake lining 10 and the brake disk 4 from Figure 1, and Figure 3 is a plan that shows the brake linings 10 and the brake disk 4 from Figure 2. The hardness of each of the brake linings 10 increases gradually and continuously toward center from two end portions in a direction of slippage relative to the brake disk 4.

Next, a method for manufacturing the brake linings 10 according to Embodiment 1 will be explained. Figure 4 is a cross section that schematically shows a state during manufacturing of the brake lining 10 from Figure 2. The brake lining 10 is constituted by: fibers 12 that form a substrate; and various compounds 13. The compounds 13 include friction modifiers, fillers, binders, etc.

Glass fibers, steel fibers, aramid fibers, carbon fibers, or potassium titanate, for example, can be used as the fibers 12. Cashew dust, rubber dust, copper, zinc, alumina, or zirconia, for example, can be used as the friction modifiers. In addition, calcium carbonate, barium sulfate, calcium sulfate, or tin sulfide, for example, can be used as the fillers. Furthermore, phenolic resins, melamine resins, or polyimides, for example, can be used as the binders.

A predetermined amount of a mixture in which the fibers 12 and the compounds 13 are premixed is injected into a die 14. The mixture inside the die 14 is pressed and heated by a punch 15 while being molded. After molding the mixture, the molded body is polished so as to have a predetermined thickness, enabling the brake lining 10 to be obtained.

Now, the pressing surface 15a of the punch 15 that comes into contact with the mixture is curved into a circular arc-shaped cross-sectional shape. Thus, spacing between the pressing surface 15a of the punch 15 and a bottom surface 14a of a cavity inside the die 14 is narrowest at a central portion. Because of that, density of the material is higher at a central portion of the brake lining 10 and hardness is increased. The density of the material decreases gradually from the central portion of the brake lining 10 toward end portions, and hardness also decreases gradually.

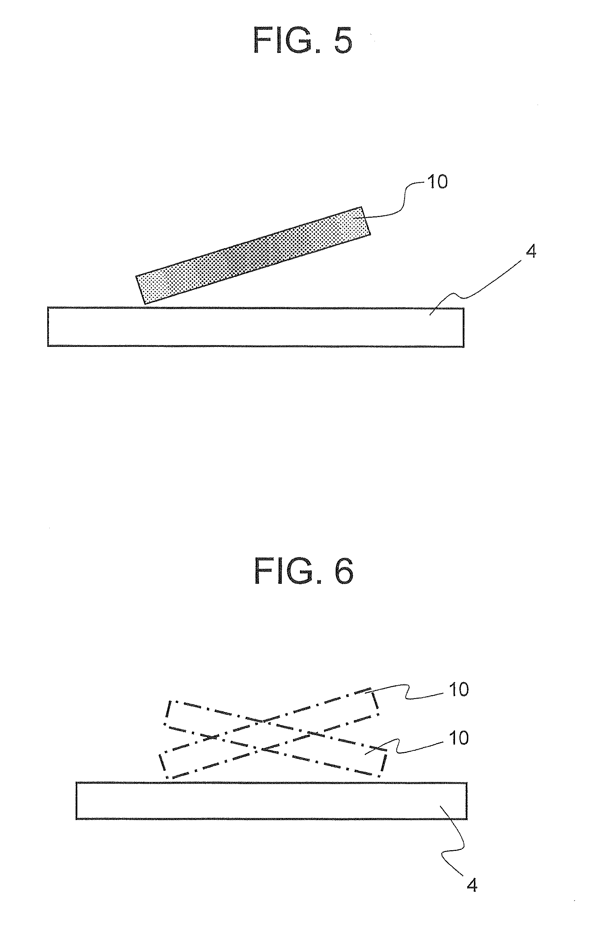

Figure 5 is an explanatory diagram that shows a state in which a brake lining 10 from Figure 1 contacts the brake disk 4 so as to be inclined relative thereto, and Figure 6 is an explanatory diagram that shows a state in which a brake lining 10 from Figure 1 vibrates while contacting the brake disk 4. In hoisting machine brakes 5, the attitude of the brake lining 10 is made variable relative to the brake disk 4 in order to keep the braking force stable. For example, brake linings 10 are often supported rotatably such that contact surface pressure is uniform even if the temperature of the brake disk 4 rises due to heat generation and the brake disk 4 is deformed.

Because of that, if the brake lining 10 contacts the brake disk 4 so as to be inclined relative thereto, as shown in Figure 5, then the supporting member and the brake disk 4 of the brake lining 10 are vibrated due to the end portion of the brake lining 10 contacting the brake disk 4 locally immediately after contact, generating noise. In initial contact of this kind, the harder the brake lining 10, the greater the impact force when the brake lining 10 contacts, often increasing noise.

If the surface states of the brake lining 10 and the brake disk 4 are different due to changes in ambient environment such as temperature or humidity, as shown in Figure 6, then the brake lining 10 vibrates and contacts the brake disk 4, and noise such as impact noise or squeaking may also be further increased.

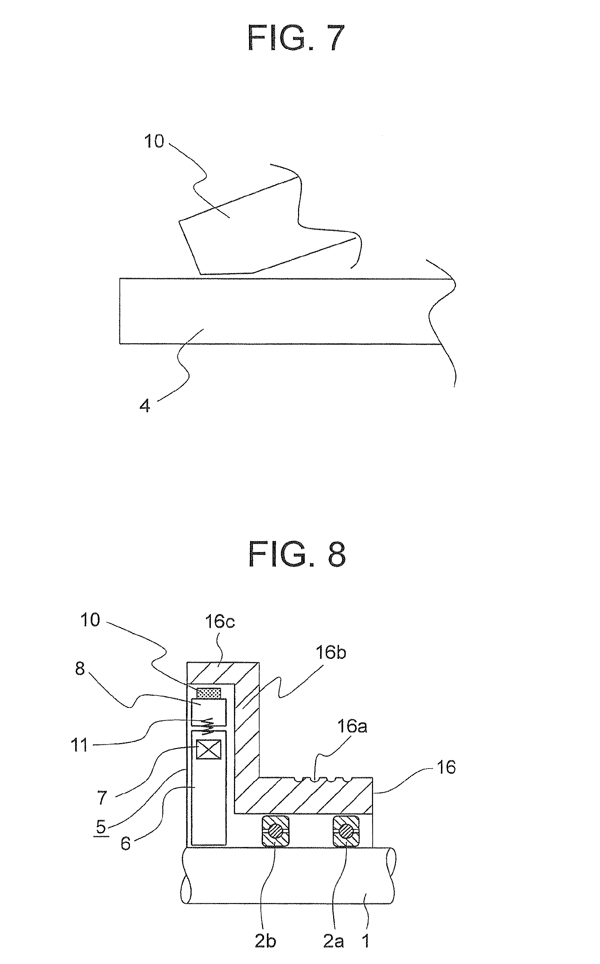

In contrast to that, since the brake lining 10 according to Embodiment 1 is configured such that the hardness is lower at the end portions, the end portion is deformed in the initial stages when the brake lining 10 contacts the brake disk 4, as shown in Figure 7, enabling mechanical shock to be absorbed. Because of this, vibration of the supporting member of the brake lining 10 and the brake disk 4 is reduced, enabling impact noise and squeaking to be suppressed.

Because a peak value of contact surface pressure can be reduced by the end portion of the brake lining 10 being deformed, localized temperature increases in the brake lining 10 can be suppressed, enabling the braking force to be kept stable.

In addition, because the hardness of the brake lining 10 changes continuously, discontinuous changes in contact surface pressure are eliminated, and surface pressure is distributed uniformly throughout the surface, thereby enabling vibration of the supporting member of the brake lining 10 and the brake disk 4 to be reduced more reliably.

Furthermore, since it is not necessary to dispose voids in the brake lining 10, wear resistance can be increased.

The brake lining 10 in which the hardness changes continuously can be achieved simply by changing the surface shape of the punch 15, enabling a high-quality hoisting machine brake 5 to be achieved inexpensively.

### Embodiment 2

Next, Figure 8 is a cross section that shows part of an elevator hoisting machine according to Embodiment 2 of the present invention. A disc brake was shown in Embodiment 1, but an internal expanding drum brake is shown in Embodiment 2. In the figure, formed integrally on a rotating body 16 are: a cylindrical sheave 16a; a disciform flange portion 16b that protrudes radially outward from a first axial end portion of the sheave 16a; and a cylindrical brake drum 16c that protrudes axially from a radially outer edge portion of the flange portion 16b (a braked rotating body).

A brake lining 10 is pressed against an inner circumferential surface (a braking surface) of the brake drum 16c by a spring force from a brake spring 11. The brake lining 10 is pulled away from the inner circumferential surface of the brake drum 16c by an electromagnetic attractive force from an electromagnetic coil 7. The rest of the configuration is similar or identical to that of Embodiment 1.

Thus, similar effects to those in Embodiment 1 can also be achieved if a brake lining 10 that is configured in a similar or identical manner to that of Embodiment 1 is applied to a drum brake.

Moreover, a drum brake that has as a braking surface an inner circumferential surface of a brake drum 16c was shown in Embodiment 2, but the present invention can be applied to various other braking apparatuses provided that they are braking apparatuses that use a brake lining 10 as a braking member such as a braking apparatus that has an outer circumferential surface of a brake drum 16c as a braking surface, for example. Consequently, the brake linings that are shown in subsequent embodiments can also be applied to various types of braking apparatuses.

### Embodiment 3

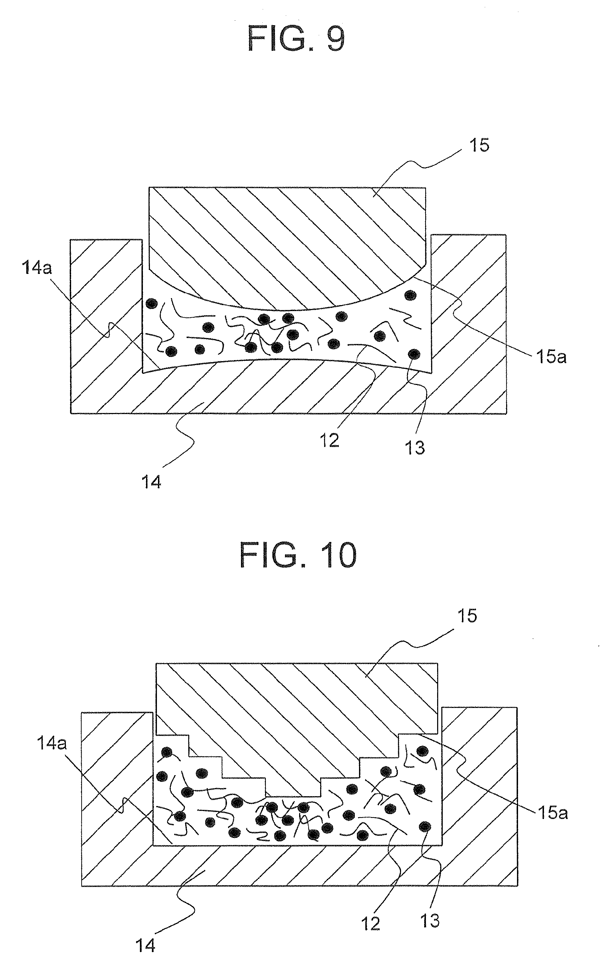

Next, Figure 9 is a cross section that schematically shows a state during manufacturing of a brake lining according to Embodiment 3 of the present invention. In the figure, a bottom surface 14a of a cavity inside a die 14 is curved into a circular arc-shaped cross-sectional shape. The rest of the configuration and the manufacturing method are similar or identical to those of Embodiment 1 or 2.

When a brake lining 10 is manufactured using a die 14 of this kind, density of material at a central portion of the brake lining 10 can be further increased, enabling differences in hardness between the central portion and end portions to be increased.

Moreover, the radii of curvature of the pressing surface 15a and the bottom surface 14a do not need to be equal.
Furthermore, the pressing surface 15a was curved in Embodiment 1, and the pressing surface 15a and the bottom surface 14a were both curved in Embodiment 3, but the bottom surface 14a only may also be curved.

### Embodiment 4

Next, Figure 10 is a cross section that schematically shows a state during manufacturing of a brake lining according to Embodiment 4 of the present invention. In the figure, a pressing surface 15a of a punch 15 has a stepped shape in which a central portion thereof protrudes maximally toward a bottom surface 14a. The rest of the configuration and the manufacturing method are similar or identical to those of Embodiment 1 or 2.

If a brake lining 10 is manufactured using a punch 15 of this kind, effects that are almost identical to those of Embodiment 1 can also be achieved.
Moreover, the punch 15 according to Embodiment 4 may also be combined with the die 14 according to Embodiment 3.
The bottom surface 14a may also be made to stand out toward the punch 15 in a stepped shape.

### Embodiment 5

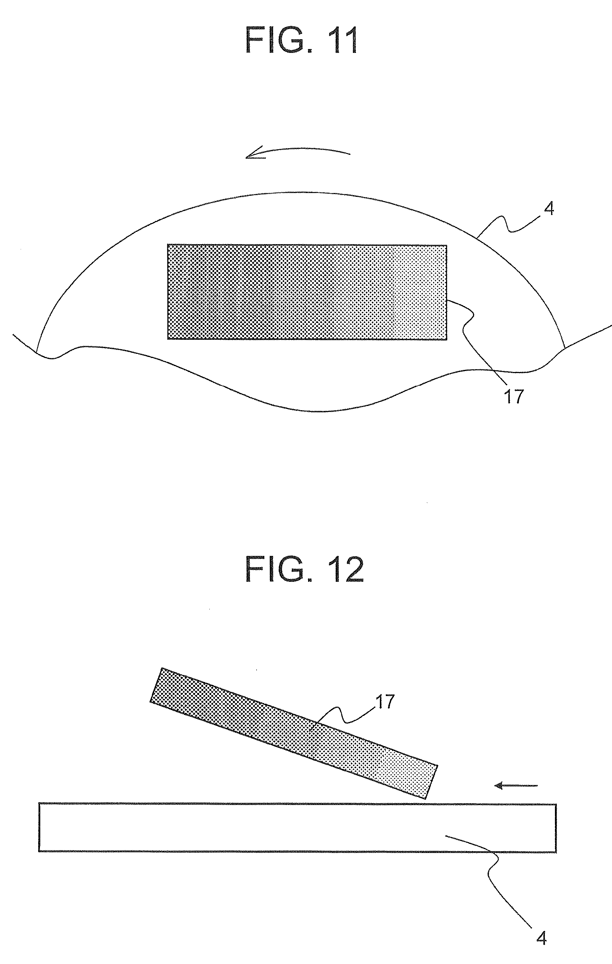

Next, Figure 11 is a side elevation that shows a brake lining 17 and a brake disk 4 according to Embodiment 5 of the present invention, and Figure 12 is an explanatory diagram that shows a state in which the brake lining 17 from Figure 11 contacts the brake disk 4 so as to be inclined relative thereto.

In Embodiment 1, a case in which a brake disk 4 rotates forward and in reverse is shown, but a brake disk 4 according to Embodiment 5 is rotated only in a direction of an arrow in Figure 11. Hardness of a brake lining 17 according to Embodiment 5 increases gradually and continuously from a first end portion towards a second end portion in a direction of slippage relative to the brake disk 4. The rest of the configuration is similar or identical to that of Embodiment 1.

In an electric motor, etc., in which the brake disk 4 rotates only in one direction, if the first end portion of the brake lining 17 contacts to the brake disk 4 first, as shown in Figure 12, then similar effects to those in Embodiment 1 can be achieved by lowering the hardness at the first end portion of the brake lining 17.

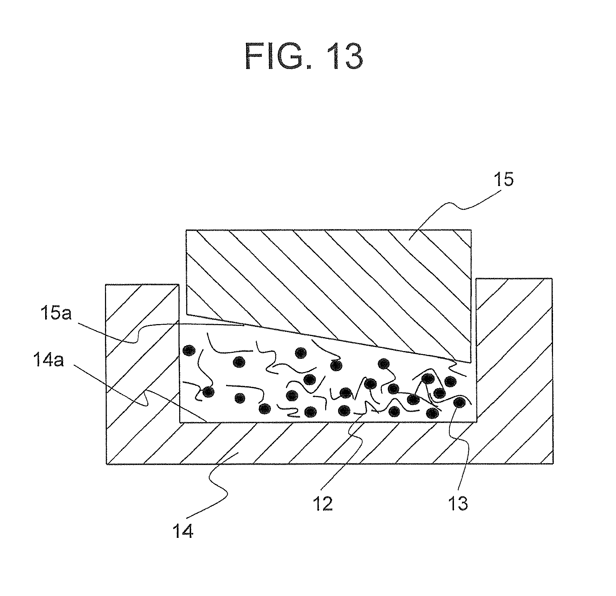

When manufacturing the brake lining 17 according to Embodiment 5, the pressing surface 15a of the punch 15 need only be inclined relative to the bottom surface 14a to reduce spacing between the pressing surface 15a and the bottom surface 14a on a side that corresponds the first end portion of the brake lining 17, as shown in Figure 13, for example. The rest of the manufacturing method is similar or identical to that of Embodiment 1.

Because it is sufficient simply to dispose an inclination on the pressing surface 15a in this manner, the brake lining 17 can be manufactured inexpensively.

Moreover, a brake lining 17 such as that of Embodiment 5 can also be applied to other types of braking apparatuses such as drum brakes like that shown in Embodiment 2, for example.
Spacing between the pressing surface 15a and the bottom surface 14a need only increase gradually from a portion that corresponds to a first longitudinal end portion of the brake lining 17 to a portion that corresponds to a second end portion, and both the pressing surface 15a and the bottom surface 14a may also be inclined (inclined relative to a plane that is perpendicular to a direction of pressing by the punch 15), or the bottom surface 14a only may also be inclined. In addition, at least one of the pressing surface 15a and the bottom surface 14a may also be curved, or made to protrude in a stepped shape.

### Embodiment 6

Next, a front elevation that shows a brake lining 18 according to Embodiment 6 of the present invention. In the figure, hardness of a brake lining 18 decreases continuously and gradually toward perimetric edge portions from a central portion in a longitudinal direction (laterally in the figure) and a width direction (a direction is that is perpendicular to the longitudinal direction and a thickness direction: vertically in the figure) of the brake lining 18. In other words, the hardness of the brake lining 18 increases gradually toward the central portion from two longitudinal end portions and also increases gradually toward the central portion from two end portions in the width direction. The rest of the configuration is similar or identical to that of Embodiment 1.

A brake lining 18 such as that described above can be manufactured by curving at least one of the pressing surface 15a of the punch 15 and the bottom surface 14a inside the die 14 into a spherical shape, heating and pressing a mixture that is injected into the die 14, and polishing it to a predetermined thickness after molding.

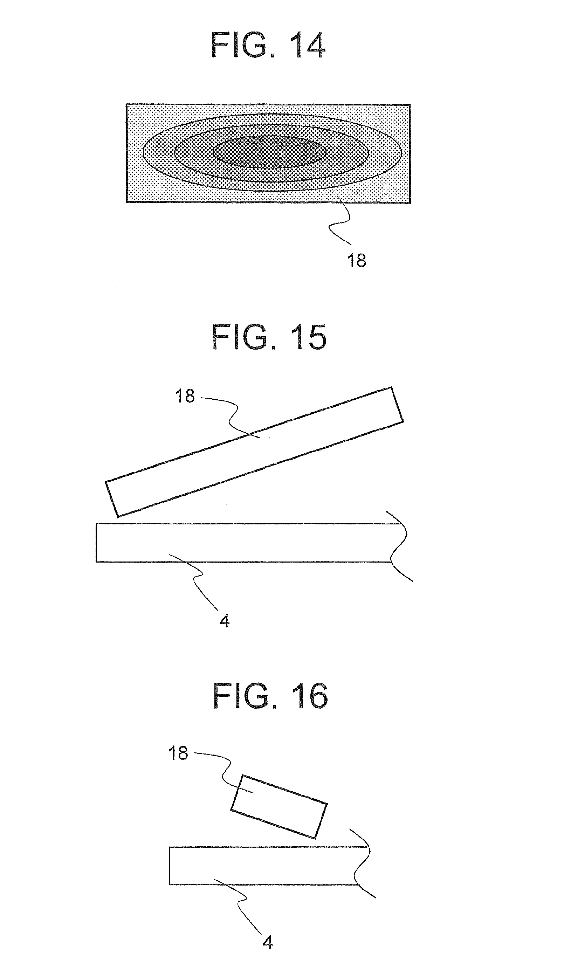

Now, the state of friction on the braking surface may change easily in environments in which temperature and humidity change significantly, in environments in which the brake disk 4 (or the brake drum 16c) is easily dirtied, or in environments in which moisture adheres easily, for example. If the state of friction changes in this manner, vibration may arise not only due to changes in attitude in a direction of sliding movement (the longitudinal direction) such as that shown in Figure 15, but also due to attitude changing in the width direction, as shown in Figure 16.

In such cases, it can be expected that the brake lining 10 will repeatedly contact the brake disk 4 in local regions of the end portions in the longitudinal direction and the width direction thereof relative to the brake disk 4.

In answer to that, mechanical shock can be alleviated even if the attitude of the brake lining 18 changes by using a brake lining 18 such as that shown in Figure 14, because a region that has reduced hardness will always contact the brake disk 4 during initial contact, enabling noise such as vibration sound, impact noise, and squeaking to be suppressed.

Because the braking force can be kept stable by reducing vibration, it is possible to provide a braking apparatus of stable quality even if the environment changes.

In addition, even if moisture or oil adheres to the brake disk 4, it can be absorbed by portions that have less density, i.e., the perimetric edge portions of the brake lining 18. Here, because moisture, or oil, etc., is less likely to be absorbed in the central portion, which has a higher hardness, changes in the coefficient of friction between the brake lining 18 and the brake disk 4 are suppressed, enabling stable braking force to be ensured.

Furthermore, because fluctuations in coefficient of friction due to environmental changes can be reduced, the braking apparatus can be made compact and lightweight.

Furthermore, because there is no major change from conventional manufacturing steps, investment in plant and equipment is suppressed, enabling a high-quality brake lining 18 to be obtained inexpensively.

Moreover, a brake lining 18 such as that of Embodiment 6 can also be applied to other types of braking apparatuses such as drum brakes like that shown in Embodiment 2, for example.
When manufacturing a brake lining 18 such as that in Embodiment 6, then at least one of the pressing surface 15a of the punch 15 and the bottom surface 14a inside the die 14 may also be made to protrude in a stepped shape such that a center thereof protrudes maximally.

### Embodiment 7

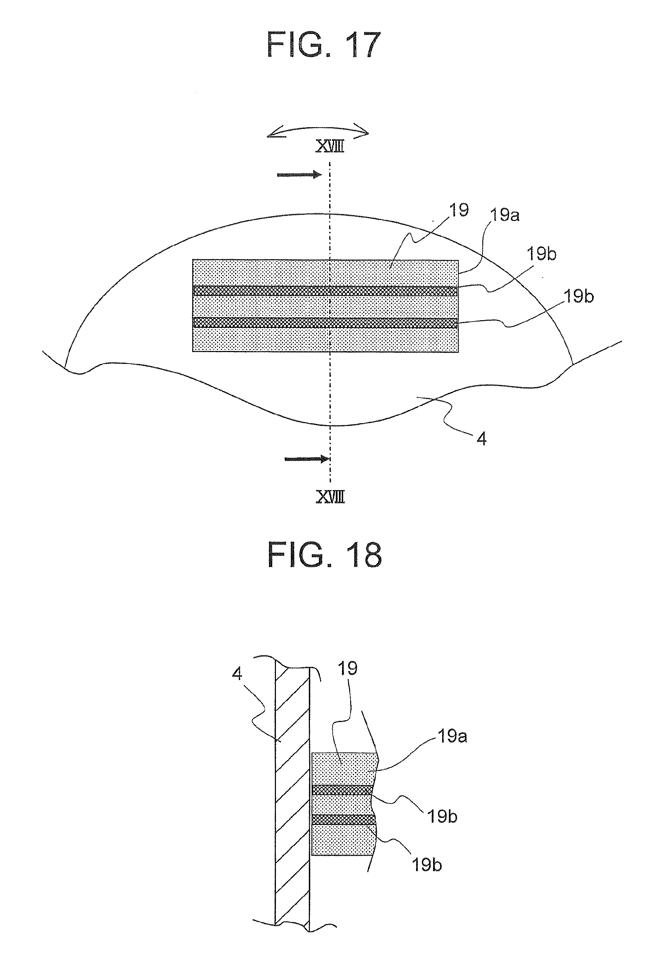

Next, Figure 17 is a side elevation that shows a brake lining 19 and a brake disk 4 according to Embodiment 7 of the present invention, and Figure 18 is a cross section that is taken along line XVIII - XVIII in Figure 17. In the figures, a brake lining 19 is constituted by: a lining main body 19a; and a plurality of (in this case, two) rectilinear high-hardness portions 19b that are disposed inside the lining main body 19a, and that have higher hardness than the lining main body 19a.

The high-hardness portions 19b are disposed parallel to a direction of slippage relative to the brake disk 4 (a longitudinal direction of the brake lining 19) over an entire length of the brake lining 19 in the longitudinal direction. The high-hardness portions 19b are also disposed so as to be spaced apart from each other in a width direction of the brake lining 19 (vertically in Figure 17).

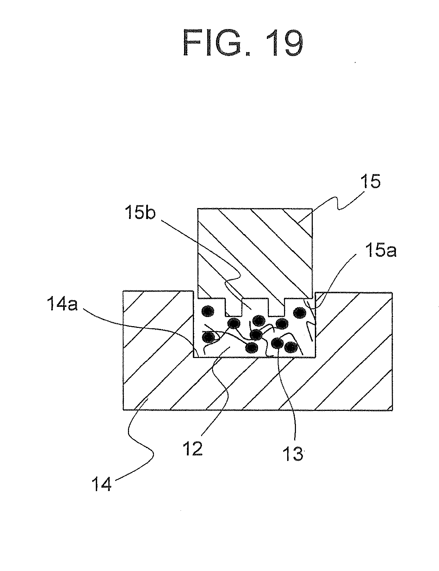

As shown in Figure 19, a brake lining 19 such as that described above can be manufactured using a punch 15 on which a plurality of projecting portions 15b are disposed, by reducing spacing between a bottom surface 14a inside a die 14 and pressing surface 15a of the punch 15 discontinuously, and heating and pressing a mixture. The high-hardness portions 19b and other portions are exposed in an identical plane by polishing a surface of the molded body after molding.

According to a brake lining 19 of this kind, because high-hardness portions 19b in which hardness is increased are formed locally, overall wear resistance can be improved. In other words, because braking force from a brake lining 19 is normally obtained at positions where surface pressure is great, abrasion of the entire brake lining 19 is reduced, and braking force can be ensured at a central portion by increasing hardness in the vicinity of the central portion to suppress abrasion at that position. Consequently, a braking apparatus can be provided in which noise such as impact noise and squeaking during contact and vibration are reduced, and in which wear resistance is high.

### Embodiment 8

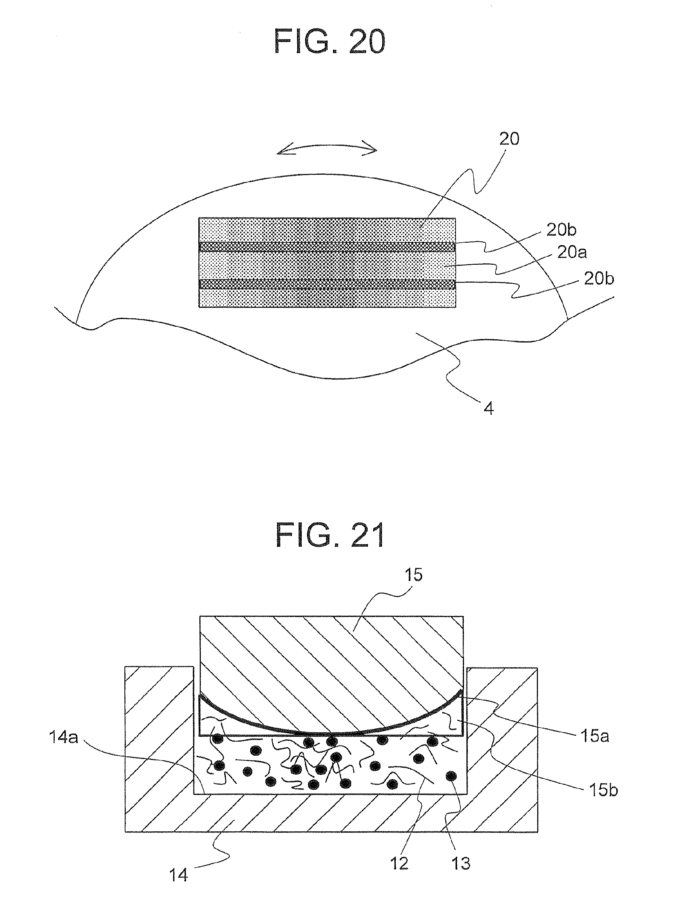

Next, Figure 20 is a side elevation that shows a brake lining 20 and a brake disk 4 according to Embodiment 8 of the present invention. In Embodiment 7, changes in hardness inside the brake lining 19 were in two phases, high and low, but in environments in which there is a lot of dust, for example, additional wear resistance may be required. In answer to that, a brake lining 20 according to Embodiment 8 has high-hardness portions 20b such as those of Embodiment 7 disposed on the brake lining 10 according to Embodiment 1.

Specifically, the brake lining 20 is constituted by: a lining main body 20a; and a plurality of (in this case, two) high-hardness portions 20b. Hardness of the lining main body 20a increases gradually and continuously toward center from two end portions in a direction of slippage relative to the brake disk 4 (a longitudinal direction of the brake lining 20). The hardness of the high-hardness portions 20b is greater than the hardness of the lining main body 20a.

The high-hardness portions 20b are disposed parallel to the direction of slippage relative to the brake disk 4 over an entire length of the brake lining 20 in the longitudinal direction. The high-hardness portions 20b are also disposed so as to be spaced apart from each other in a width direction of the brake lining 20 (vertically in Figure 20).

As shown in Figure 21, a brake lining 20 such as that described above can be manufactured using a punch 15 in which a plurality of projecting portions 15b are disposed on a pressing surface 15a that is curved in a circular arc shape.

According to a brake lining 20 of this kind, even if there is a lot of dust in the environment, noise such as impact noise and squeaking, and vibration, can be suppressed, enabling a high-quality, long-lasting braking apparatus to be provided.

Moreover, in the manufacturing methods that are shown in Figures 19 and 21, the projecting portions 15b were disposed on the punch 15, but projecting portions may also be disposed on the bottom surface 14a inside the die 14, and a rear surface of the molded body polished after molding.
Projecting portions may also be disposed on both the punch 15 and the die 14, and two surfaces of the molded body polished after molding.
In addition, in Embodiments 7 and 8, the high-hardness portions 19b and 20b were disposed at two positions in the width direction of the brake linings 19 and 20, but they may also be disposed at three or more positions.
Furthermore, in Embodiments 7 and 8, the high-hardness portions 19b and 20b were disposed so as to be parallel to the direction of sliding motion, but they may also be parallel to the width direction. The high-hardness portions 19b and 20b that are parallel to the direction of sliding motion and high-hardness portions that are parallel to the width direction may also be disposed in combination with each other.

### Embodiment 9

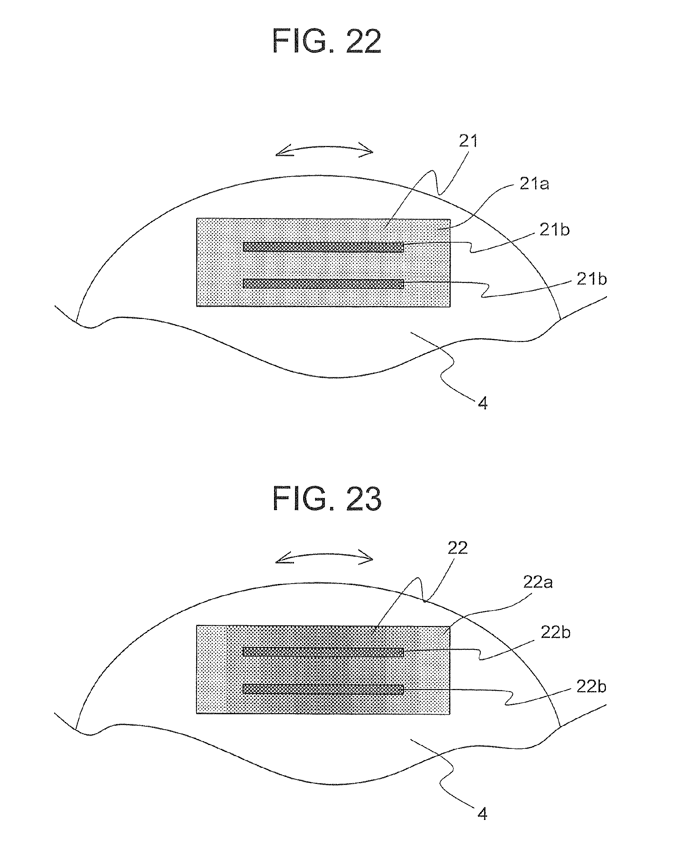

Next, Figure 22 is a side elevation that shows a brake lining 21 and a brake disk 4 according to Embodiment 9 of the present invention. In the figure, a brake lining 21 is constituted by: a lining main body 21 a; and a plurality of (in this case, two) rectilinear high-hardness portions 21 b that have higher hardness than the lining main body 21 a.

The high-hardness portions 19b according to Embodiment 7 were disposed over an entire length of the brake lining 19 in the longitudinal direction, but the high-hardness portions 21 b according to Embodiment 9 are not disposed on two longitudinal end portions of the brake lining 21, being disposed only partially in the longitudinal direction, in this case in a vicinity of a central portion. The rest of the configuration and the manufacturing method are similar or identical to that of Embodiment 7.

According to a brake lining 21 of this kind, wear resistance can be improved, enabling a braking apparatus to be provided that can ensure stable braking force against environmental changes. Because fluctuations in coefficient of friction due to environmental changes can be reduced, the braking apparatus can also be made compact and lightweight.

### Embodiment 10

Next, Figure 23 is a side elevation that shows a brake lining 22 and a brake disk 4 according to Embodiment 10 of the present invention. In the figure, a brake lining 22 is constituted by: a lining main body 22a; and a plurality of (in this case, two) rectilinear high-hardness portions 22b that have higher hardness than the lining main body 22a.

The high-hardness portions 20b according to Embodiment 8 were disposed over an entire length of the brake lining 20 in the longitudinal direction, but the high-hardness portions 22b according to Embodiment 10 are not disposed on two longitudinal end portions of the brake lining 22, being disposed only partially in the longitudinal direction, in this case in a vicinity of a central portion. The rest of the configuration and the manufacturing method are similar or identical to that of Embodiment 8.

According to a brake lining 22 of this kind, wear resistance can be improved, enabling a braking apparatus to be provided that can ensure stable braking force against environmental changes. Because fluctuations in coefficient of friction due to environmental changes can be reduced, the braking apparatus can also be made compact and lightweight.

### Embodiment 11

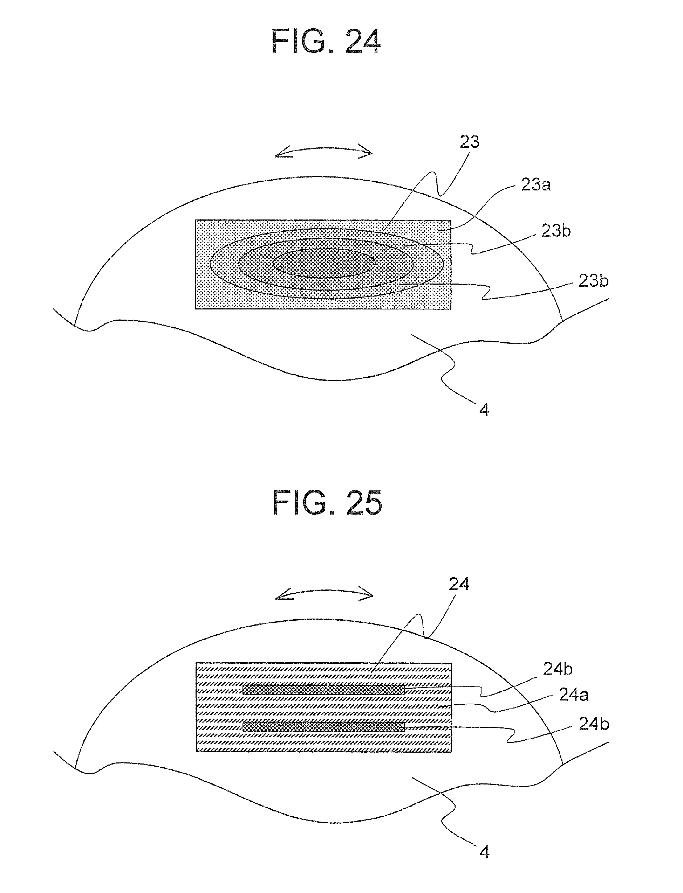

Next, Figure 24 is a side elevation that shows a brake lining 23 and a brake disk 4 according to Embodiment 11 of the present invention. In the figure, a brake lining 23 is constituted by: a lining main body 23a; and a plurality of (in this case, two) rectilinear high-hardness portions 23b that have higher hardness than the lining main body 23a.

Hardness of the lining main body 23a decreases gradually and continuously toward perimetric edge portions from a central portion in longitudinal and width directions of the brake lining 23, as was shown in Embodiment 6. The high-hardness portions 23b are not disposed on two longitudinal end portions of the brake lining 23, being disposed only partially in the longitudinal direction, in this case in a vicinity of the central portion.

According to a brake lining 23 of this kind, wear resistance can be improved, enabling a braking apparatus to be provided that can ensure stable braking force against environmental changes. Because fluctuations in coefficient of friction due to environmental changes can be reduced, the braking apparatus can also be made compact and lightweight.

Moreover, high-hardness portions such those shown in Embodiments 7 through 11 may also be combined with the brake lining 17 that is shown in Embodiment 5.

### Embodiment 12

Next, Figure 25 is a side elevation that shows a brake lining 24 and a brake disk 4 according to Embodiment 12 of the present invention. In Embodiments 7 through 11 above, the brake linings 19 through 23 are each made of only an identical kind of material, but a brake lining that has a hardness distribution can also be obtained by combining a plurality of materials.

A brake lining 24 according to Embodiment 12 is configured by combining: a high-friction portion 24a that functions as a lining main body in which a coefficient of friction against the brake disk 4 is increased by adding a high-friction material; and a high-hardness portion 24b that is made of a material that has a higher hardness than the high-friction portion 24a. Rubber, urethane, or cork, for example, can be used as the high-friction material that is added to the high-friction portion 24a.

The high-hardness portion 24b is exposed as two parallel rectilinear shapes in a vicinity of a central portion of the surface of the brake lining 24 that contacts the brake disk 4. The exposed portions of this high-hardness portion 24b have a similar or identical shape to high-hardness portions 21 b, 22b, or 23b according to Embodiments 9 through 11.

Being constituted by a resin, etc., that has a high coefficient of friction, the high-friction portion 24a can ensure sufficient braking capacity, but is easily abraded. Because of this, abrasion of the brake lining 24 can be suppressed and braking force can be ensured by disposing the high-hardness portion 24b in the vicinity of the central portion, which has a higher contact surface pressure with the brake disk 4. Consequently, wear resistance is improved even if the coefficient of friction is high, enabling a long-lasting braking apparatus to be achieved.

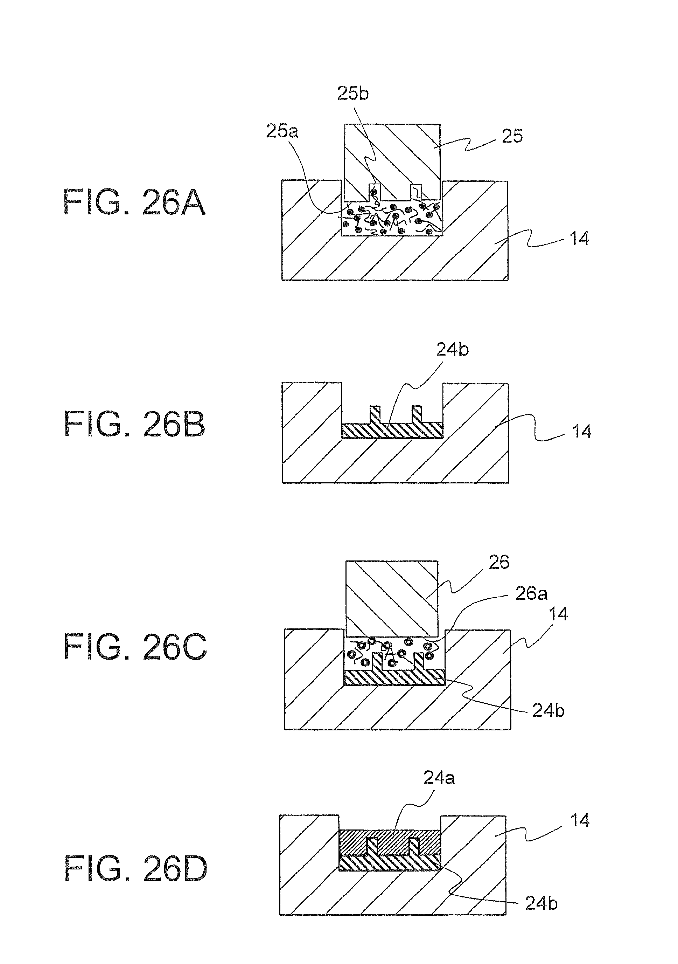

Next, a method for manufacturing the brake lining 24 will be explained. Figures 26A through 26D are cross sections that schematically and sequentially show steps of a manufacturing method for the brake lining 24 from Figure 25. First, as shown in Figure 26A, the material of the high-hardness portion 24b is placed inside a die 14, and is heated and pressed by a first punch 25 on a pressing surface 25a of which a plurality of recess portions 25b are formed. Thus, as shown in Figure 26B, a high-hardness portion 24b is formed on a bottom portion inside the die 14.

Next, as shown in Figure 26C, the material of the high-friction portion 24a is injected into the die 14 from above the molded body of the high-hardness portion 24b, and is heated and pressed by a second punch 26 that has a flat pressing surface 26a. As shown in Figure 26D, a molded body is thereby obtained in which the high-friction portion 24a and the high-hardness portion 24b are combined. Finally, the brake lining 24 is removed from the die 14, and baked then polished to expose the high-hardness portion 24b at the surface.

According to a manufacturing method of this kind, because the brake lining 24 can be manufactured using conventional equipment, a high-quality braking apparatus can be achieved inexpensively.

Normally, the smaller the coefficient of friction of the brake lining 24 on the brake disk 4 the greater the weight and dimensions of the braking apparatus, but because the coefficient of friction can be increased by disposing the high-friction portion 24a, brake design tolerance is increased, enabling reductions in size and weight to be achieved.

Moreover, the shape, number, and orientation of the exposed portions of the high-hardness portion 24b can be modified as required in a similar or identical manner to that of Embodiments 7 through 11.
The shape of the brake linings according to Embodiments 1 through 12 is not limited to being rectangular.

## Claims

1. A brake lining that is pushed against a braked rotating body to brake rotation of the braked rotating body,
wherein the brake lining is **characterized in that** hardness increases gradually towards a central portion from an end portion in a direction of sliding motion relative to the braked rotating body.

2. A brake lining according to Claim 1, **characterized in that** the hardness increases gradually towards the central portion from two end portions in the direction of sliding motion.

3. A brake lining according to Claim 2, **characterized in that** the hardness also increases gradually towards the central portion from two end portions in a width direction.

4. A brake lining that is pushed against a braked rotating body to brake rotation of the braked rotating body,
wherein the brake lining is **characterized by** comprising:
a lining main body; and
a high-hardness portion that is disposed in a vicinity of a central portion of the lining main body, and that has a higher hardness than the lining main body.

5. A brake lining according to Claim 4, **characterized in that** the high-hardness portion has a rectilinear shape that is parallel to a direction of sliding motion relative to the braked rotating body.

6. A brake lining according to Claim 5, **characterized in that** the high-hardness portion is disposed partially in the direction of sliding motion.

7. A brake lining according to Claim 4, **characterized in that** hardness of the lining main body increases gradually toward the central portion from an end portion in the direction of sliding motion relative to the braked rotating body.

8. A method for manufacturing a brake lining comprising steps of:
mixing together a substrate and a plurality of compounds to make a mixture;
injecting the mixture into a die, and molding the mixture by heating and pressing using a punch; and
polishing a molded body thus formed,
wherein the method for manufacturing the brake lining is **characterized by** using a combination of the punch and the die in which spacing between a bottom surface inside the die and a pressing surface of the punch is gradually reduced from a portion that corresponds to an end portion of the brake lining toward a portion that corresponds to a central portion thereof.

9. A method for manufacturing a brake lining according to Claim 8, **characterized in that** at least one of the bottom surface and the pressing surface is curved into a circular arc shape.

10. A method for manufacturing a brake lining according to Claim 8, **characterized in that** at least one of the bottom surface and the pressing surface protrudes in a stepped shape.

11. A method for manufacturing a brake lining according to Claim 8, **characterized in that** at least one of the bottom surface and the pressing surface is inclined relative to a plane that is perpendicular to a direction of pressing by the punch.

12. A method for manufacturing a brake lining according to Claim 8, **characterized in that** at least one of the bottom surface and the pressing surface is curved into a spherical shape.

13. A method for manufacturing a brake lining comprising steps of:
mixing together a substrate and a plurality of compounds to make a mixture;
injecting the mixture into a die, and molding the mixture by heating and pressing using a punch; and
polishing a molded body thus formed,
wherein the method for manufacturing the brake lining is **characterized by** using a combination of the punch and the die so as to comprise a region in which spacing between a bottom surface inside the die and a pressing surface of the punch changes gradually and a region in which the spacing changes discontinuousfy.

14. A method for manufacturing a brake lining that is configured by combining:
a high-friction portion to which a high-friction material is added; and
a high-hardness portion that has a higher hardness than the high-friction portion,
wherein the method for manufacturing the brake lining is **characterized by** comprising steps of:
injecting a material of the high-hardness portion into a die, and molding the material of the high-hardness portion by heating and pressing using a first punch in which a recess portion is formed on a pressing surface;
injecting a material of the high-friction portion into the die from above a molded body of the high-hardness portion, and molding the material of the high-friction portion by heating and pressing using a second punch; and
polishing a molded body in which the high-hardness portion and the high-friction portion are combined to expose the high-hardness portion at a surface thereof.
